(19) Europäisches Patentamt
European Patent Office
Office européen des brevets

(11) **EP 4 137 277 A1**

(12) **DEMANDE DE BREVET EUROPEEN**

(43) Date de publication:
**22.02.2023 Bulletin 2023/08**

(21) Numéro de dépôt: **22189264.9**

(22) Date de dépôt: **08.08.2022**

(51) Classification Internationale des Brevets (IPC):
**B25J 9/00** *(2006.01)* **A61H 1/02** *(2006.01)*

(52) Classification Coopérative des Brevets (CPC):
**B25J 9/0006**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**
Etats de validation désignés:
**KH MA MD TN**

(30) Priorité: **18.08.2021 FR 2108749**

(71) Demandeurs:
• **Poteaux, Edouard**
  **69480 Pommiers (FR)**

• **Waeyaert, Josselyn**
  **69400 Porte des Pierre Dorées (FR)**

(72) Inventeurs:
• **POTEAUX, Edouard**
  **69480 POMMIERS (FR)**
• **WAEYAERT, Josselyn**
  **69400 PORTE DES PIERRES DOREES (FR)**

(74) Mandataire: **Oudin, Stéphane**
  **JurisPatent - Cabinet Guiu**
  **10, rue Paul Thénard**
  **21000 Dijon (FR)**

(54) **DISPOSITIF D'ASSISTANCE MUSCULAIRE**

(57) Dispositif (1) mécanique d'assistance posturale et musculaire propre à assister musculairement un utilisateur, comportant deux ensembles (3, 4) reliés chacun par une articulation de hanche (20) à une assise (2), chaque ensemble (3, 4) comportant une barre supérieure (5) reliée à l'assise, et reliée à une barre inférieure (6) par une articulation de genou (7) pivotant entre une position de pliage minimale, dite de repos, et une position de pliage maximale, chaque ensemble (3, 4) comportant également des moyens de fixation à une jambe d'un utilisateur et des moyens d'assistance musculaire (9) exerçant, lorsque l'ensemble (3, 4) est dans une position intermédiaire entre position de repos et position de pliage maximale, un effet de rappel élastique vers la position de repos, cet effet étant propre à exercer, au niveau de l'assise (2), une force de rappel verticale d'une valeur définie, quelle que soit ladite position intermédiaire.

[Fig. 1]

Figure 1

EP 4 137 277 A1

**Description**

Le domaine technique de l'invention concerne celui des dispositifs d'assistance musculaire, permettant d'aider un utilisateur équipé dudit dispositif à réaliser des mouvements ou à adopter une posture.

Le domaine technique de l'invention concerne plus particulièrement celui des dispositifs permettant à un utilisateur équipé dudit dispositif de passer d'une position debout à une position rabaissée, jambes pliées, et inversement.

L'invention présente un intérêt en particulier dans le cadre des travaux liés aux vignobles, mais peut s'appliquer à d'autres domaines comme d'autres récoltes, des activités mécaniques sur un véhicule, ou toute autre activité dans laquelle une personne adopte, de manière répétée ou continue, une position nécessitant une génuflexion partielle ou un agenouillement partiel.

Certaines activités nécessitent pour un utilisateur de rester dans une position inconfortable. Ainsi, par exemple, lors de la taille de la vigne dans les vignobles, les ceps sont relativement bas par rapport à une personne debout, nécessitant une position des opérateurs accroupie ou courbée ou penchée. Une position courbée ou penchée pendant une durée importante peut mener à un mal de dos ou un lumbago.

Il est donc maintenant préféré une station accroupie pour laquelle le poids du corps repose sur les pieds, comme en station debout, sur les talons ou non, mais pour laquelle les genoux sont plus ou moins pliés, jusqu'à éventuellement amener les fesses à reposer sur les mollets ou les talons. Dans cette station, le tronc reste vertical, ce qui évite les problèmes dorsaux. Cependant, l'opérateur nécessite de se baisser pour travailler à un endroit, se relever, se déplacer à un autre endroit, et se baisser de nouveau. Ces actions successives toute la journée sont fatigantes, sollicitent de manière importante les muscles de l'opérateur, et peuvent aussi mener à des douleurs musculaires.

Il est connu pour y remédier d'utiliser un siège à roulette, que l'opérateur sangle à la ceinture, mais cette solution ne convient pas sur des terrains accidentés ou pentus, et ne permet pas de travailler à différentes hauteurs. De plus, l'opérateur se retrouve limité dans ses mouvements.

Une autre solution connue est d'utiliser un exosquelette robotisé muni de moteurs électriques et de capteurs, contrôlé électroniquement, permettant de prendre en compte les intentions d'activation musculaires de l'opérateur équipé dudit exosquelette, et démultiplier l'effort à réaliser. Cette solution est cependant encombrante et lourde, limite les mouvements de l'opérateur et est très onéreuse à l'achat et à l'entretien et nécessite une source d'énergie.

Encore une autre solution est enseignée dans le document US4138156A. Ce document présente un dispositif pour supporter le poids du corps d'un individu. Ce dispositif comprend une unité à attacher à chaque jambe. Chaque unité comprend une barre basse ayant une section supérieure et une section inférieure qui s'étend longitudinalement à partir de ladite section supérieure. La partie supérieure est équipée de sangles pour permettre la fixation de la barre basse au bas de la jambe de l'individu. Une barre haute de l'unité est reliée de manière articulée à l'extrémité supérieure de la barre basse et un élément de renfort, pouvant pivoter à partir de la barre supérieure, peut être positionné sélectivement entre la barre haute et la section inférieure de la barre basse. Lorsque l'individu s'accroupit dans une position de repos, la jambe supérieure de l'individu engage la barre haute et, en engageant l'élément de renfort dans la section inférieure de la barre basse, poursuit la section inférieure de la barre basse pour assurer un support de l'unité et du poids de l'individu équipé.

Cette solution totalement mécanique présente l'avantage d'être économique, de ne pas nécessiter de batteries, de ne pas gêner la marche, et de permettre à un utilisateur de pouvoir s'appuyer sur ce dispositif à la manière d'un appui sur un siège en une position définie semi- accroupie, afin de soulager l'effort musculaire nécessaire pour conserver cette position spécifique.

Mais cette solution présente cependant un certain nombre d'inconvénients. Tout d'abord, l'opérateur ainsi appareillé peut avoir une station debout, se déplacer ou adopter une station assise à une hauteur définie. Mais dans le cas d'un passage successivement de la station debout à la station assise à une hauteur définie et inversement, l'utilisateur réalise le même effort que sans le dispositif. Des ressorts au niveau de l'articulation du genou ne font que garantir un retour de l'unité à une position initiale ne gênant pas la marche de l'utilisateur équipé du dispositif. En outre, les deux unités étant indépendantes, un utilisateur assis jambes écartées est dans une position instable, l'assise se faisant ponctuellement sur le haut des unités.

Un autre inconvénient de l'enseignement du document US4138156A est que les unités sont ajustables en longueur pour s'adapter à la taille d'un utilisateur, mais ne prennent pas en compte le poids de l'utilisateur. Ainsi, une personne d'une forte corpulence se penchera vers l'avant, dans une position instable et courbée, pour se lever. Ce dispositif tel qu'enseigné n'est en fait pas adapté à une utilisation nécessitant des mouvements répétés en grand nombre, par exemple pendant la taille de ceps de vigne.

Un autre inconvénient enfin est qu'un utilisateur ne peut, avec ce dispositif, qu'adopter une station debout ou une station assise, ce dispositif n'aidant pas à adopter une position intermédiaire entre la station debout et la station assise.

L'art antérieur ne permet pas de proposer une solution économique et robuste permettant de répéter en grand nombre des mouvements de passage d'une posture debout à une posture accroupie et inversement, ajustable à toute morphologie et qui ne gêne pas la marche ou les mouvements décrits ci-avant ou autre d'un utilisateur équipé d'une telle solution.

L'invention a pour objectif d'améliorer l'existant en proposant un dispositif présentant les avantages cités ci-avant sans présenter les inconvénients décrits ci-avant.

Un autre objectif de l'invention est de proposer un dispositif mécanique simple et économique à fabriquer, léger, permettant à un utilisateur ainsi équipé de s'accroupir à toute hauteur désirée de manière longue puis de se relever, et ce de manière répétée et en grand nombre et sans fatigue, par des moyens d'assistance aux efforts musculaires nécessaires pour s'accroupir et se relever.

Ce dispositif selon l'invention permet une grande liberté de mouvement au niveau des jambes et du bassin, et peut présenter une configuration désactivée par un geste pour encore augmenter la liberté de mouvement.

Ce dispositif selon l'invention apporte une solution mécanique et économique, alternative aux exosquelettes électroniques.

Ce dispositif selon l'invention est également adaptable à la morphologie de l'utilisateur pour améliorer encore plus le confort d'utilisation.

A cet effet, l'invention concerne un dispositif mécanique d'assistance musculaire propre à assister musculairement un utilisateur équipé dudit dispositif, ledit dispositif comportant deux ensembles de part et d'autre des membres inférieurs de l'utilisateur, reliés chacun par une articulation de hanche à une assise du dispositif, chaque ensemble comportant une barre supérieure du dispositif reliée à l'assise d'une part et d'autre part à une barre inférieure par une articulation de genou libre en rotation au moins partiellement, la barre supérieure pivotant par rapport à la barre inférieure autour de l'articulation de genou entre une position de pliage minimale dite de repos et une position de pliage maximale, chaque ensemble du dispositif comportant également des moyens de fixation propres à le solidariser à une jambe correspondante d'un utilisateur équipé dudit dispositif, caractérisé par le fait que chaque ensemble du dispositif comporte en outre des moyens d'assistance musculaire exerçant, lorsque l'ensemble est dans une position intermédiaire comprise entre la position de repos et la position de pliage maximale, un effet de rappel élastique de la position intermédiaire vers la position de repos, cet effet de rappel élastique étant propre à exercer, au niveau de l'assise, une force verticale dirigée du bas du dispositif vers le haut du dispositif, dite force de rappel, ladite force de rappel présentant une valeur définie, à un intervalle de tolérance près, quelle que soit ladite position intermédiaire.

Cela permet de proposer un dispositif mécanique simple qui diffère de l'art antérieur. Par le terme mécanique, on désigne un dispositif ne comportant pas de matériel électrique ou électronique, sans batterie ou moyen d'alimentation externe. Un tel dispositif permet à un utilisateur équipé d'un tel dispositif de se déplacer et, quand il le souhaite, de s'accroupir, en s'appuyant sur l'assise. Quelle que soit la position accroupie atteinte, le dispositif exerce une force de rappel vers le haut constante, opposée au poids exercé par l'utilisateur sur l'assise du dispositif, réduisant l'effort musculaire à réaliser pour se maintenir à ladite position accroupie ou se relever. L'utilisateur sollicite ainsi moins ses muscles, tout en automatiquement prenant une position conservant le dos droit, assis sur l'assise. L'utilisateur peut ainsi travailler toute la journée à passer d'une position debout à une position accroupie, et inversement, ou à prendre une position accroupie pendant un intervalle de temps relativement plus long, comme par exemple cinq minutes, le dispositif lui apportant une aide pour se relever ou pour rester dans une position accroupie sous la forme d'une force de rappel dirigée vers le haut.

Cette force de rappel verticale peut être ajustée en fonction de la morphologie de l'utilisateur, permettant ainsi d'optimiser le dispositif en fonction des besoins de l'utilisateur.

Le dispositif comporte des ensembles de part et d'autre des membres inférieurs d'un utilisateur équipé dudit dispositif, ce qui le rend peu encombrant et réduit la gêne occasionnée par le dispositif dans les mouvements de l'utilisateur.

Selon une caractéristique de l'invention, lorsqu'un ensemble est dans une position de repos, l'angle entre la barre supérieure et la barre inférieure est de 180 degrés.

Selon une caractéristique de l'invention, lorsqu'un ensemble est dans une position de pliage maximale, l'angle entre la barre supérieure et la barre inférieure est de 60 degrés.

Cette amplitude permet une utilisation du dispositif adaptée à l'anatomie des utilisateurs pour les actions de se lever et s'accroupir.

Selon une caractéristique de l'invention, les moyens d'assistance musculaire de chaque ensemble comportent un organe de rappel élastique rattaché par une extrémité solidairement à des moyens de fixation de l'organe de rappel élastique à l'un de la barre supérieure ou de la barre inférieure, ledit organe de rappel élastique s'étendant sous la forme d'un lien à des moyens de fixation complémentaires de l'autre barre inférieure ou supérieure, ledit lien collaborant avec un organe de renvoi au niveau de l'articulation de genou.

L'utilisation d'un lien relié à un organe de rappel élastique simplifie la conception du dispositif au niveau de l'articulation de genou, l'ensemble est également plus compact, l'organe de rappel élastique étant positionné longitudinalement le long d'une barre.

Le lien présentant un coefficient d'étirement quasi nul, l'effort de l'organe de rappel est bien retransmis.

L'organe de rappel élastique peut ainsi s'étirer ou se comprimer lorsqu'un utilisateur équipé dudit dispositif s'accroupit, et exercer un effort de rappel du dispositif à la position dite de repos.

Selon une caractéristique de l'invention, l'organe de rappel élastique comporte un élément à effet ressort de raideur constante et l'organe de renvoi comporte une gorge dans laquelle coopère le lien, l'organe de renvoi présentant un profil courbe vu latéralement, ledit profil courbe suivant une courbe formée de portions successives tangentes à des arcs de cercle de rayons différents, propres à modifier la valeur de l'effet de rappel élastique et la force exercée vers le haut par le dispositif au niveau de l'assise.

L'utilisateur s'appuyant sur l'assise exerce, au niveau de l'assise, une force d'appui sur le dispositif et plie ledit dispositif au niveau des articulations de genou de chaque ensemble. Le dispositif en retour exerce une force de rappel verticale, au niveau de l'assise. Différentes valeurs de la force de rappel au niveau de l'assise ont été estimées particulièrement confortables par des utilisateurs.

Selon une caractéristique de l'invention, le profil courbe de l'organe de renvoi suit une courbe passant par au moins 50% des points aux coordonnées exprimées en millimètres du tableau 1, avec une tolérance de plus ou moins 0,1 millimètres.

Selon une caractéristique de l'invention, le profil courbe de l'organe de renvoi suit une courbe passant par 100% des points aux coordonnées exprimées en millimètres du tableau 1, avec une tolérance de plus ou moins 0,1 millimètres.

Selon une caractéristique de l'invention, le dispositif peut recevoir différents éléments à effet ressort de raideur constante, adaptés au poids de différents utilisateurs pouvant être équipés dudit dispositif.

Cela permet d'ajuster le dispositif à la morphologie et surtout au poids de l'utilisateur, afin de l'adapter à l'effort musculaire de l'utilisateur.

Selon une caractéristique de l'invention, le dispositif comporte des moyens de réglage de la position des moyens d'assistance musculaire, et plus précisément des moyens de fixation et des moyens de fixation complémentaires sur la barre inférieure et supérieure.

Cela permet de réaliser un ajustement personnalisé selon l'utilisateur pour augmenter le confort d'utilisation.

Selon une caractéristique de l'invention, la barre inférieure et/ou supérieure des ensembles comporte des moyens d'ajustement de leurs longueurs respectives.

Cela permet d'ajuster le dispositif à la morphologie et surtout à la longueur de la cuisse et de la jambe de l'utilisateur, afin de l'adapter à l'effort musculaire de l'utilisateur et pour augmenter le confort d'utilisation.

Selon une caractéristique de l'invention, le dispositif comporte des moyens de débrayage et d'embrayage des moyens d'assistance musculaire.

Ces moyens de débrayage et d'embrayage permettent d'activer ou de désactiver la tension de l'organe de rappel élastique, ce qui permet de se déplacer simplement, équipé du dispositif avec les moyens de débrayage et d'embrayage débrayés.

D'autres buts et avantages de la présente invention apparaîtront au cours de la description qui va suivre se référant aux dessins ci-joints illustrant des exemples de réalisation et dans lesquels :

[Fig.1] est une vue schématique en perspective avant d'un dispositif selon l'invention, en appui sur le sol, dans une position intermédiaire ;

[Fig.2] est une vue schématique partielle en perspective avant d'un utilisateur équipé d'un dispositif selon un autre mode de réalisation de l'invention, en station debout, un ensemble du dispositif visible et une partie de l'assise ;

[Fig.3] est une vue schématique partielle d'un dispositif selon l'invention, centrée sur une articulation de genou située entre la barre supérieure et la barre inférieure d'un ensemble du dispositif ;

[Fig.4] est une représentation schématique du projeté sur le plan de rotation correspondant d'un organe de renvoi au niveau de l'articulation de genou de l'invention, au niveau du plan de rotation de ladite articulation de genou :

[Fig.5] est une vue schématique de côté d'un ensemble du dispositif de l'invention, illustrant schématiquement une force exercée au niveau de l'assise du dispositif selon l'invention, et une force de rappel du dispositif selon l'invention ;

[Fig.6] est un graphique représentant, en fonction d'un angle de pliage du dispositif, un effort en Newton des organes de rappel élastique dudit dispositif et une force de rappel au niveau de l'assise dudit dispositif en Newton du dispositif selon l'invention, pour des organes de rappel élastique de raideur $46,00.10^{-3}$ N/mètre, et pour une longueur entre l'assise et l'axe de rotation de l'articulation de genou de 320 millimètres. Les efforts sont indiqués sur ledit graphique sous la forme de ronds et les forces de rappel sous la forme de carrés.

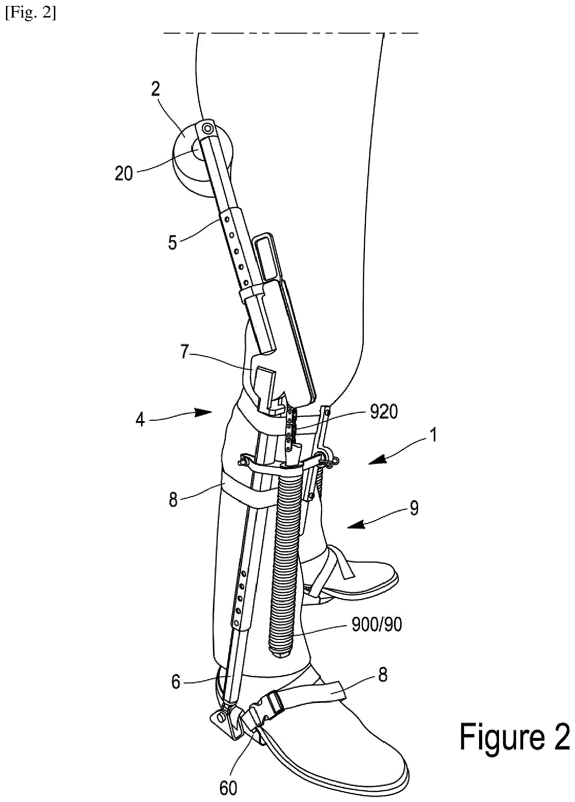

L'invention concerne un dispositif 1 d'assistance musculaire. Ce dispositif 1 peut être entièrement mécanique, sans batterie, pile ou électronique embarquée, ce qui le rend alors robuste et autonome. Ce dispositif 1 est propre à assister musculairement et mécaniquement un utilisateur équipé dudit dispositif 1. Ce dispositif 1 comporte une assise 2 à l'arrière du dispositif 1, sous la forme ici d'une tige recouverte d'un coussin en mousse tubulaire, mais peut être une coque d'assise moulée. Cette assise 2 est reliée à sa gauche à un ensemble 3 et à sa droite à un autre ensemble 4. Lorsqu'un utilisateur est équipé du dispositif 1, les ensembles 3, 4 sont alors positionnés de part et d'autre des membres inférieurs dudit utilisateur, comme notamment illustré sur la [Fig.2], l'assise 2 étant alors située sous le fessier de l'utilisateur.

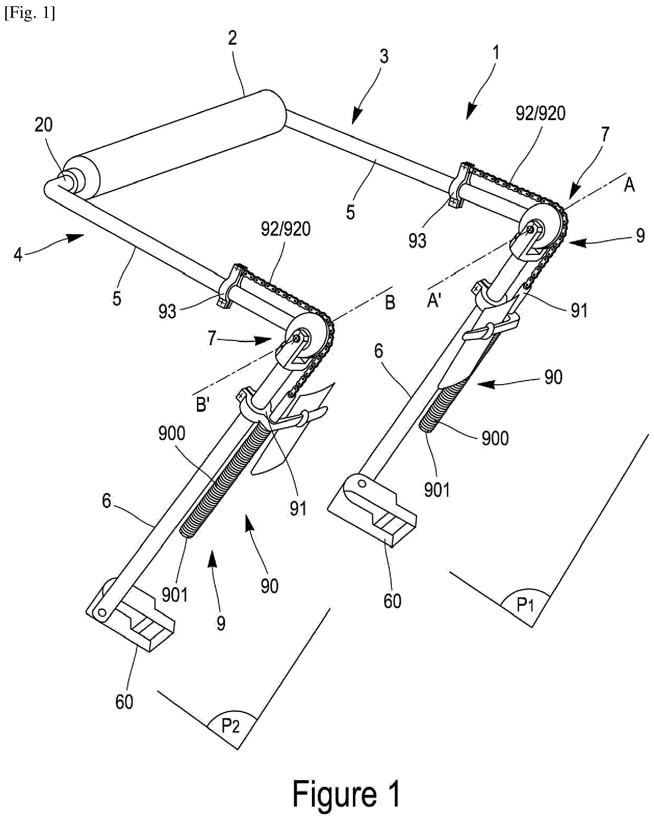

En référence aux dessins, le dispositif 1 est considéré en position d'utilisation, avec le dispositif 1 présentant un avant et un arrière, un gauche et un droit et un haut et un bas, le bas du dispositif 1 venant en appui sur le sol. Le dispositif 1 comporte un avant et un arrière respectivement à gauche et à droite de la [Fig. 1], un haut et un bas respectivement en haut et en bas de la [Fig.1], le côté gauche du dispositif 1 étant en arrière-plan et le côté droit du dispositif 1 étant en premier plan.

Chaque ensemble 3, 4 est relié à l'assise 2 par une articulation de hanche 20, formant ici une liaison rotule. Cette articulation de hanche 20 permet une grande liberté de mouvement par un utilisateur équipé dudit dispositif 1, au niveau des hanches.

Chaque ensemble 3, 4 comporte une barre supérieure 5 et une barre inférieure 6, reliées entre elles par une articulation de genou 7.

En fait, la barre supérieure 5 de l'ensemble 3, 4 est reliée par une extrémité haute à l'assise 2 via une articulation de hanche 20, et par une extrémité basse à l'articulation de genou 7. Et la barre inférieure 6 de l'ensemble 3, 4 est reliée par une extrémité haute à l'articulation de genou 7, et par une extrémité basse à un élément d'appui 60 contre le sol. Cet élément d'appui 60 présente une plaque pouvant être placée sous le pied d'un utilisateur équipé dudit dispositif 1, cette plaque s'étend verticalement par une paroi périphérique venant ceinturer au moins partiellement le pied d'un utilisateur, notamment le talon dudit pied.

La barre supérieure 5 peut pivoter par rapport à la barre inférieure 6 autour de l'articulation de genou 7, et plus précisément autour d'un axe de rotation AA' et BB' de l'articulation de genou 7 de l'ensemble 3, 4 respectivement gauche et droit. Le pivotement peut se faire entre une position de pliage minimale dite de repos et une position de pliage maximale.

L'axe de rotation AA' et BB' définit des plans de rotation P1, P2 de l'articulation de genou 7 de l'ensemble 3, 4 correspondant.

En position de pliage dite de repos, l'articulation de genou 7 étant alors ouverte, l'angle α entre la barre supérieure 5 et la barre inférieure 6 est de 180 degrés, la barre supérieure 5 présentant un angle par rapport à un axe vertical compris entre 0 et 10 degrés, notamment 5 degrés.

En position de pliage maximale, l'articulation de genou 7 étant alors fermée, l'angle α entre la barre supérieure 5 et la barre inférieure 6 est de 60 degrés, la barre supérieure 5 présentant un angle par rapport à un axe vertical compris entre 50 et 70 degrés, notamment 60 degrés.

L'obtention d'un angle de pliage pour une position de repos supérieur à 180 degrés ou d'un angle de pliage pour une position de pliage maximale inférieur à 60 degrés est possible, mais les essais ont montré que ce dispositif 1 est ressenti comme plus confortable pour cette amplitude angulaire. En fonction des morphologies des utilisateurs visés, le dispositif 1 peut présenter des modifications quant à l'amplitude et les valeurs pour les positions de repos et de pliage maximale.

L'articulation de genou 7 est formée d'un arbre 70 traversant d'une part un élément d'extrémité bas de la barre supérieure 5, et d'autre part deux bras d'une fourche venant latéralement de part et d'autre dudit élément d'extrémité bas de la barre supérieure 5. Cet arbre 70 est porté par l'axe de rotation AA' et BB' selon l'ensemble 3, 4.

Chaque ensemble 3, 4 du dispositif 1 comporte également des moyens de fixation 8 propres à solidariser ledit ensemble 3, 4 à une jambe correspondante d'un utilisateur équipé dudit dispositif 1. Ces moyens de fixation 8 peuvent aussi être propres à solidariser ledit ensemble 3, 4 à un pied ou à une cuisse correspondant d'un utilisateur équipé dudit dispositif 1, comme illustré sur la [Fig.2]. Ces moyens de fixation 8 peuvent se présenter sous la forme de sangles, comme illustré sur la [Fig.2], ou tout autre moyen alternatif et équivalent.

Par le terme jambe, on désigne une partie d'un membre inférieur d'un utilisateur située entre le genou et la cheville.

Contrairement à l'enseignement du document US4138156A, où le dispositif se place derrière les membres inférieurs d'un utilisateur, chaque ensemble 3, 4 est configuré pour venir être placé latéralement par rapport aux membres inférieurs d'un utilisateur dudit dispositif 1, l'ensemble gauche 3 à gauche du membre inférieur gauche de l'utilisateur et l'ensemble droit 4 à droite du membre inférieur droit de l'utilisateur, comme illustré notamment sur la [Fig.2]. Cela permet que le dispositif 1 soit moins gênant lorsqu'un utilisateur équipé dudit dispositif 1 se meut.

Chaque ensemble 3, 4 du dispositif 1 comporte en outre des moyens d'assistance musculaire 9 exerçant, lorsque l'ensemble 3, 4 correspondant est dans une position intermédiaire comprise entre la position de repos et la position de pliage maximale, un effet de rappel élastique de la position intermédiaire vers la position de repos. Cet effet de rappel élastique est propre à exercer une force verticale dirigée du bas du dispositif 1 vers le haut, dite force de rappel. Cette force de rappel présente une valeur définie, à un intervalle de tolérance près, quelle que soit ladite position intermédiaire du dispositif 1.

Les moyens d'assistance musculaire 9 de chaque ensemble 3, 4 peuvent comporter par exemple un organe de rappel élastique 90, comportant un élément à effet ressort de raideur constante, par exemple d'un ressort 900 hélicoïdal qui est comprimé pour passer de la position de repos à la position de pliage maximale ou à une position intermédiaire. Cet organe de rappel élastique 90 peut être rattaché par une extrémité solidairement à une bride de compression 91 formant des moyens de fixation de l'organe de rappel élastique 90 à l'un de la barre supérieure 5 ou de la barre inférieure 6.

En l'occurrence, les figures présentent une bride de compression 91 fixée sur la barre inférieure 6 de telle sorte qu'un élément à effet ressort de raideur constante, ici un ressort 900 hélicoïdal, soit en appui en compression contre ladite bride de compression 91 et qu'il s'étende selon un axe parallèle à la barre inférieure 6. L'organe de rappel élastique 90 s'étend sous la forme d'un lien 92, ici une chaine à rouleaux 920. Cette chaine à rouleaux 920 est montée solidaire avec l'extrémité libre 901 du ressort 900 hélicoïdal, elle traverse la bride de compression 91 par un orifice central, et s'étend jusqu'à des moyens de fixation complémentaires de l'organe de rappel élastique 90 à l'autre barre inférieure 6 ou supérieure 5, ici sous la forme d'une bride de tension 93.

Ainsi, par cette chaine à rouleaux 920 et ce ressort 900, l'organe de rappel élastique 90 est rattaché d'une part à la barre supérieure 5 et d'autre part à la barre inférieure 6. La chaine à rouleaux 920 passe à proximité de l'articulation de genou 7, au niveau de laquelle la chaine à rouleaux 920 coopère avec un organe de renvoi 94 que comportent les moyens d'assistance musculaire 9. Cet organe de renvoi 94 prend la forme d'une poulie non circulaire, comportant une gorge 940 sur sa tranche, accueillant une portion de la chaine à rouleaux 920. Cet organe de renvoi 94 se présente sous la forme d'une plaque aux bords courbes. La gorge 940 est configurée pour que la chaine à rouleaux 920 soit toujours engagée dans la gorge 940 au moins sur une portion, quelle que soit la position de l'ensemble 3, 4 correspondant ou la position du dispositif 1. En outre, la profondeur de la gorge 940 correspond à la moitié de l'épaisseur de la chaine à rouleaux 920, et plus généralement du lien 92. Ici, la profondeur de la gorge 940 est de 2 millimètres.

En fait, l'organe de renvoi 94 est rattaché de manière solidaire à la barre supérieure 5 et forme l'élément d'extrémité bas de la barre supérieure 5 de l'articulation de genou 7. Ce rattachement se fait au niveau d'une surface plate 941 perpendiculaire à la barre supérieure 5. Ainsi, la courbe directrice d'une chaine à rouleaux 920 est dans le plan de rotation P1, P2 de l'articulation de genou 7 de l'ensemble 3, 4 correspondant. Par le terme courbe directrice, on désigne la succession des points situés au milieu de chaque section de la chaine à rouleaux 920. Ici, la chaine à rouleaux 920 présente une section d'épaisseur de 4 millimètres. Bien entendu, si l'organe de renvoi 94 est rattaché de manière solidaire à la barre inférieure 6, le rattachement se fait au niveau d'une surface plate 941 perpendiculaire à la barre inférieure 6.

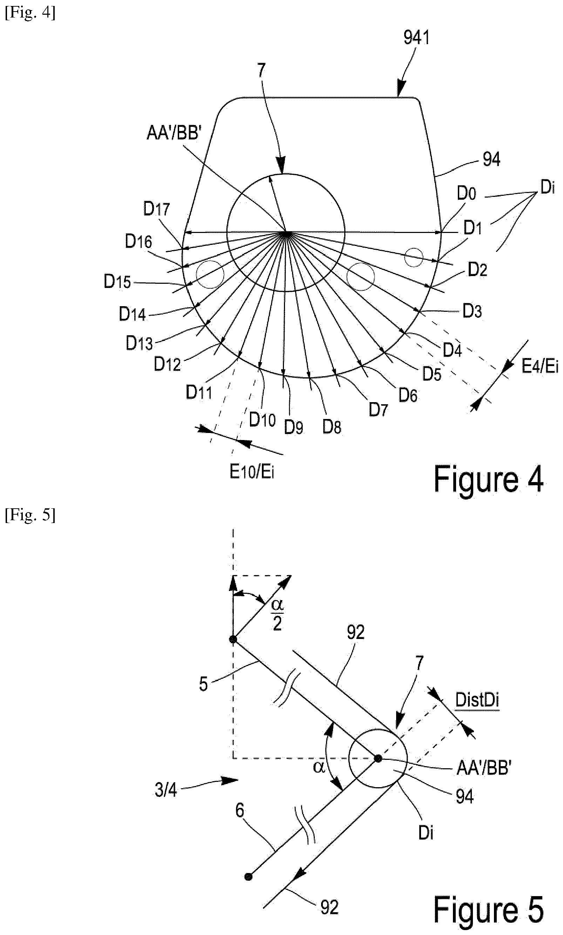

L'organe de renvoi 94 de l'ensemble 3 ou 4, projeté normalement sur le plan de rotation P1 ou P2 correspondant de l'ensemble 3 ou 4, présente un profil courbe, comme illustré sur la [Fig.4]. Ce profil courbe est formé de portions successives tangentes à des arcs de cercle de rayons différents. Les points du profil courbe se retrouvent à une distance définie de l'axe d'articulation correspondant AA' ou BB'. Ainsi, la gorge 940, la chaine à rouleaux 920, et donc la courbe directrice de la chaine à rouleaux 920 accueillie dans cette gorge 940, se situent à une distance définie de l'axe de rotation AA' ou BB', variable selon l'endroit de mesure. Aux endroits où la chaine à rouleaux 920 est en contact avec l'organe de renvoi 94, le projeté normalement sur le plan de rotation P1 ou P2 correspondant de l'ensemble 3 ou 4 de la courbe directrice de la chaine à rouleaux 920 et du profil courbe se confondent.

Le tableau 1 ci-dessous présente dix-sept distances radiales D1, D2, ...D16, D17 prises entre l'axe de rotation de l'articulation de genou 7 et la courbe directrice de la chaine à rouleaux 920, pour différents angles de pliage de 10 degrés en 10 degrés, depuis l'angle de pliage correspondant à la position au repos jusqu'à un angle de pliage théorique de 0°. En fait, la distance mesurée correspond à celle entre l'axe de rotation de l'articulation de genou 7 et la courbe directrice de la chaine à rouleaux 920, pour un angle donné, au niveau du point de contact extrême de la chaine à rouleaux 920 avec l'organe de renvoi 94, ce point de contact extrême étant le plus éloigné par rapport au point de contact correspondant à la position au repos.

Le profil courbe permet ainsi de modifier la valeur de l'effet de rappel élastique et la force exercée vers le haut par le dispositif 1 au niveau de l'assise 2.

[Tableaux 1]

| Angle $\alpha$ en degrés entre la barre supérieure 5 et la barre inférieure 6 | Référence du point correspondant sur la figure 4 | Dist Di : Distance entre le point Di et l'axe de rotation de l'articulation de genou en millimètres |
|---|---|---|
| 180 (angle $\alpha$ de position de repos définie) | D0 | 34,000 |
| 170 | D1 | 34,000 |
| 160 | D2 | 34,000 |
| 150 | D3 | 34,000 |
| 140 | D4 | 34,000 |

(suite)

| Angle α en degrés entre la barre supérieure 5 et la barre inférieure 6 | Référence du point correspondant sur la figure 4 | Dist Di : Distance entre le point Di et l'axe de rotation de l'articulation de genou en millimètres |
|---|---|---|
| 130 | D5 | 34,000 |
| 120 | D6 | 33,500 |
| 110 | D7 | 33,000 |
| 100 | D8 | 32,500 |
| 90 | D9 | 31,643 |
| 80 | D10 | 30,500 |
| 70 | D11 | 29,105 |
| 60 angle α de position de pliage maximale définie | D12 | 28,000 |
| 50 | D13 | 27,000 |
| 40 | D14 | 26,000 |
| 30 | D15 | 25,000 |
| 20 | D16 | 24,000 |
| 10 | D17 | |
| 23,000 | | |

Lorsqu'un ensemble 3, 4 passe d'une position de repos à une position intermédiaire ou une position de pliage maximale, le lien 92 rattaché à la bride de tension 93 se tend, s'engage et vient en contact sur et contre une plus grande longueur dans la gorge 940 de l'organe de renvoi 94 et comprime le ressort 900 solidaire de la bride de compression 91 à une extrémité, ce qui génère un effet de rappel élastique vers la position de repos. Cet effet de rappel élastique a pour conséquence une force de rappel verticale dirigée vers le haut, générée par chaque ensemble 3, 4.

Ainsi, avec un organe de renvoi 94 présentant le profil tel que défini dans le tableau 1, le dispositif ainsi obtenu permet un confort d'utilisation satisfaisant.

L'utilisateur équipé du dispositif 1 et s'accroupissant exerce au niveau de l'assise 2 une force. Le dispositif 1 en se pliant génère un premier moment de force sur l'axe de l'articulation de genou 7 égal à la longueur de la barre supérieure 5 multiplié par le poids de l'utilisateur projeté sur un plan perpendiculaire à ladite barre selon une direction parallèle à celle-ci. Le dispositif 1, du fait de son pliage au niveau de l'articulation de genou 7 de chaque ensemble 3, 4, génère un deuxième moment de force égal à la distance entre l'axe de rotation de l'articulation de genou 7 et le profil courbe de l'organe de renvoi 94, multiplié par une force de tension exercée par l'organe de rappel élastique 90. Ce deuxième moment est proportionnel à l'angle de pliage du dispositif 1, qui influe sur la tension de l'organe de rappel élastique 90 et la distance entre l'axe de rotation de l'articulation de genou 7 et le profil courbe de l'organe de renvoi 94. Un moment de rappel égal à ce deuxième moment peut être calculé, mettant en œuvre une force de rappel verticale au niveau de l'assise 2. Cette force de rappel verticale, du fait de la structure du dispositif 1, est constante à un intervalle défini près. Différentes valeurs de la force de rappel au niveau de l'assise 2 ont été estimées particulièrement confortables par les utilisateurs.

Le calcul de la force de rappel verticale dirigée vers le haut, générée par un ensemble 3, 4 pour les différentes valeurs de l'angle α du tableau 1, suit la formule 1 suivante :

[Math.1]

$$Fri = \frac{(DistDi \times (k \times Ei)}{\left(L \times \cos\left(\frac{(180 - \alpha)}{2}\right)\right)}$$

Dans la formule 1 :

- le terme « F*ri* » désigne la force de rappel verticale générée au niveau de l'assise 2 par un ensemble 3 ou 4, pour un angle $\alpha$ de pliage donné indiqué dans le tableau 1 ;
- le terme « DistDi » désigne la distance radiale parmi D1 à D17 prise entre l'axe de rotation de l'articulation de genou 7 et la courbe directrice de la chaine à rouleaux 920, pour un angle $\alpha$ de pliage donné indiqué dans le tableau 1 ;
- le terme k désigne la raideur de l'élément à effet ressort de l'organe de rappel élastique 90 de l'ensemble correspondant ;
- le terme «Ei » désigne la longueur de compression correspondant à la somme de l'arc entre un point sur le profil courbe de la [Fig.4] correspondant à la position de repos et le point Di sur le profil courbe de la [Fig.4] correspondant à la position extrême de contact entre l'organe de renvoi 94 et la chaine à rouleaux 920 pour un angle $\alpha$ donné, ce terme est également égal à la somme sur le profil courbe des distances entre deux points successifs, depuis le point D1 jusqu'au point Di correspondant à la position extrême évoquée ci-avant. Il convient de noter que le profil courbe entre deux points successifs Di et Di+1 pour un indice i compris entre 1 et 16 est construit en utilisant physiquement un cerce, ou en mettant en œuvre une fonction dite spline d'interpolation sur un logiciel de conception en 3 dimensions pour lisser le profil courbe entre les points Di ;
- le terme «L » désigne la longueur entre l'assise 2 et l'axe de rotation de l'articulation de genou 7,
- le terme « $\alpha$ » désigne l'angle $\alpha$ entre la barre supérieure 5 et la barre inférieure 6.

Cette formule permet de connaitre la valeur de la force de rappel verticale de chaque ensemble 3 ou 4, pour un angle $\alpha$ de pliage du tableau 1. Cette formule est obtenue en partant d'une égalité des moments de forces exercées d'une part au niveau de l'assise 2, et d'autre part au niveau du point sur le profil courbe de la [Fig.4] correspondant à la position extrême de contact entre l'organe de renvoi 94 et la chaine à rouleaux 920 pour un angle $\alpha$ donné. La force de rappel exercée par le dispositif 1 au niveau de l'assise 2 correspond à la somme des forces de rappel exercées par les deux ensembles 3,4.

La forme particulière de l'organe de renvoi 94 en contact avec la chaine à rouleaux 920 permet que la force de rappel soit sensiblement constante, quelle que soit la position intermédiaire adoptée de l'ensemble 3, 4 correspondant.

En fait, la forme particulière de l'organe de renvoi 94, et notamment le fait que les distances entre chaque point D1 à D17 et l'axe de rotation de l'articulation de genou 7 ne sont pas constantes, fait que l'augmentation de la compression du ressort entre deux points successifs Di, Di+1 n'est pas proportionnelle linéairement à l'angle $\alpha$. Le deuxième moment de force qui est exercé au niveau du point extrême varie donc de manière non linéaire. La valeur du deuxième moment de force peut ainsi être modifiée de manière à ce que la force de rappel verticale exercée au niveau de l'assise 2 sois constante, à un intervalle de tolérance près de l'ordre du pourcentage au regard de la force de rappel, quel que soit l'angle $\alpha$ de pliage des articulations de genou 7 des ensembles 3, 4, comme par exemple de plus ou moins deux pour cent.

Le tableau 2 ci-dessous présente, en fonction d'un angle de pliage $\alpha$ du dispositif 1, à la fois un effort en Newton des organes de rappel élastique 90 dudit dispositif 1 et une force de rappel au niveau de l'assise 2 dudit dispositif 1 en Newton du dispositif 1 selon l'invention, pour des organes de rappel élastique 90 de raideur $46,00.10^{-3}$ N/ mètre, et pour une longueur L entre l'assise 2 et l'axe de rotation de l'articulation de genou 7 de 320 millimètres, et un organe de renvoi 94 conforme aux dimensions du tableau 1.

[Tableaux2]

| Angle $\alpha$ en degrés entre la barre supérieure 5 et la barre inférieure 6 | Effort de rappel des organes de rappel élastiques en Newton | Force de rappel verticale exercée par le dispositif 1 au niveau de l'assise 2, en Newton |
|---|---|---|
| 180 (angle $\alpha$ de position de repos définie) | 0 | 0 |
| 170 | 272,97 | 666 |
| 160 | 545,94 | 668 |
| 150 | 818,91 | 672 |
| 140 | 1 091,88 | 678 |
| 130 | 1 364,85 | 686 |
| 120 | 1 633,80 | 674 |
| 110 | 1 898,74 | 683 |
| 100 | 2 159,67 | 672 |
| 90 | 2416,58 | 684 |

(suite)

| Angle $\alpha$ en degrés entre la barre supérieure 5 et la barre inférieure 6 | Effort de rappel des organes de rappel élastiques en Newton | Force de rappel verticale exercée par le dispositif 1 au niveau de l'assise 2, en Newton |
|---|---|---|
| 80 | 2 669,48 | 675 |
| 70 | 2914,35 | 667 |
| 60 angle $\alpha$ de position de pliage maximale définie | 3 155,21 | 683 |
| 50 | 3 392,05 | 678 |
| 40 | 3 620,86 | 674 |
| 30 | 3 841,64 | 671 |
| 20 | 4 054,40 | 669 |
| 10 | 4 259,13 | 668 |

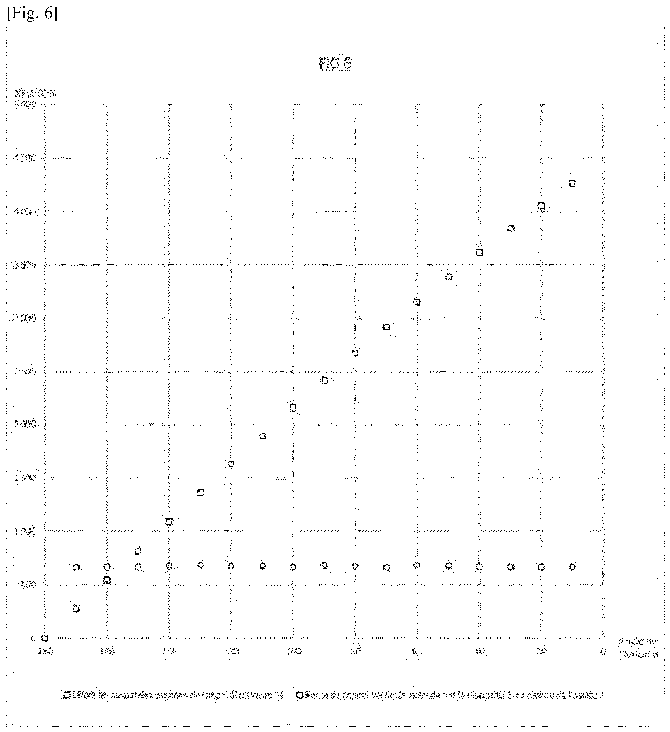

La [Fig.6] reprend les valeurs du tableau 2 sous la forme de deux courbes illustrant le fait que l'effort de rappel au niveau de l'articulation de genou 7 n'est pas linéaire par rapport à la variation d'angle de flexion, et le fait que la force de rappel verticale s'exerçant au niveau de l'assise 2 reste quant à elle sensiblement constante, à un intervalle de tolérance près de quelques pour cent.

Selon une autre caractéristique de l'invention, l'organe de rappel élastique 90 comporte un élément à effet ressort de raideur constante, ici le ressort à compression 900.

Le dispositif 1 peut recevoir différents éléments à effet ressort de raideur constante, interchangeables, lesdites raideurs pouvant être adaptées au poids de différents utilisateurs pouvant être équipés dudit dispositif 1, afin d'assurer un effet de rappel élastique confortable. En effet, un effet de rappel élastique trop important peut gêner un utilisateur équipé dudit dispositif 1 pour s'accroupir, alors qu'un effet de rappel élastique trop faible n'apporte pas l'assistance attendue.

Il a été estimé qu'une force de rappel de 75% à plus ou moins 10% de la valeur du poids exercé sur le dispositif 1 correspondait notamment à un compromis satisfaisant.

Ainsi, un dispositif 1, présentant un ressort de raideur $28,9.10^{-3}$ N/mètre, et pour une longueur L entre l'assise 2 et l'axe de rotation de l'articulation de genou 7 de 300 millimètres, présente un effet de rappel élastique exerçant au niveau de l'assise 2 une force de rappel verticale de bas en haut de 440 Newton, à 50 Newton près, voire à 10 Newton près, pour un angle de pliage entre la barre supérieure 5 et la barre inférieure 6 compris entre 180 et 60 degrés, particulièrement adapté pour un utilisateur pesant entre 50 et 60 kilogrammes.

De même, un dispositif 1 présentant un ressort de raideur $34,55.10^{-3}$ N/mètre, et pour une longueur L entre l'assise 2 et l'axe de rotation de l'articulation de genou 7 de 300 millimètres, présente un effet de rappel élastique exerçant au niveau de l'assise 2 une force de rappel verticale de bas en haut de 530 Newton, à 50 Newton près, voire à 10 Newton près, pour un angle de pliage entre la barre supérieure 5 et la barre inférieure 6 compris entre 180 et 60 degrés, particulièrement adapté pour un utilisateur pesant entre 60 et 70 kilogrammes.

Aussi, un dispositif 1 présentant un ressort de raideur $43,00.10^{-3}$ N/mètre, et pour une longueur L entre l'assise 2 et l'axe de rotation de l'articulation de genou 7 de 320 millimètres, présente un effet de rappel élastique exerçant au niveau de l'assise 2 une force de rappel verticale de bas en haut de 620 Newton, à 50 Newton près, voire à 10 Newton près, pour un angle de pliage entre la barre supérieure 5 et la barre inférieure 6 compris entre 180 et 60 degrés, particulièrement adapté pour un utilisateur pesant entre 70 et 80 kilogrammes.

Également, un dispositif 1 présentant un ressort de raideur $46,50.10^{-3}$ N/mètre, et pour une longueur L entre l'assise 2 et l'axe de rotation de l'articulation de genou 7 de 320 millimètres, présente un effet de rappel élastique exerçant au niveau de l'assise 2 une force de rappel verticale de bas en haut de 670 Newton, à 50 Newton près, voire à 10 Newton près, pour un angle de pliage entre la barre supérieure 5 et la barre inférieure 6 compris entre 180 et 60 degrés, particulièrement adapté pour un utilisateur pesant entre 80 et 90 kilogrammes.

Aussi, un dispositif 1 présentant un ressort de raideur $59,00.10^{-3}$ N/mètre, et pour une longueur L entre l'assise 2 et l'axe de rotation de l'articulation de genou 7 de 340 millimètres, on peut avoir un dispositif 1 présentant un effet de rappel élastique exerçant au niveau de l'assise 2 une force de rappel verticale de bas en haut de 800 Newton, à 75 Newton près, voire à 15 Newton près, pour un angle de pliage entre la barre supérieure 5 et la barre inférieure 6 compris entre 180 et 60 degrés, particulièrement adapté pour un utilisateur pesant entre 90 et 100 kilogrammes.

Selon une caractéristique de l'invention, le profil de l'organe de renvoi 94 suit une courbe passant par au moins la moitié des points D1 à D17 du tableau 1, avec une tolérance de plus ou moins 0,1 millimètres.

Selon une caractéristique de l'invention, le profil de l'organe de renvoi 94 suit une courbe passant par tous les points D1 à D17 du tableau 1, avec une tolérance de plus ou moins 0,1 millimètres.

Selon une caractéristique de l'invention, les barres supérieures 5 et/ou les barres inférieures 6 sont des tubes en aluminium pour des raisons de légèreté du dispositif 1, mais elles peuvent également être en acier, en matière composite ou tout autre matériau, et être pleines, sous la forme de profilés ou de lames planes ou courbes transversalement.

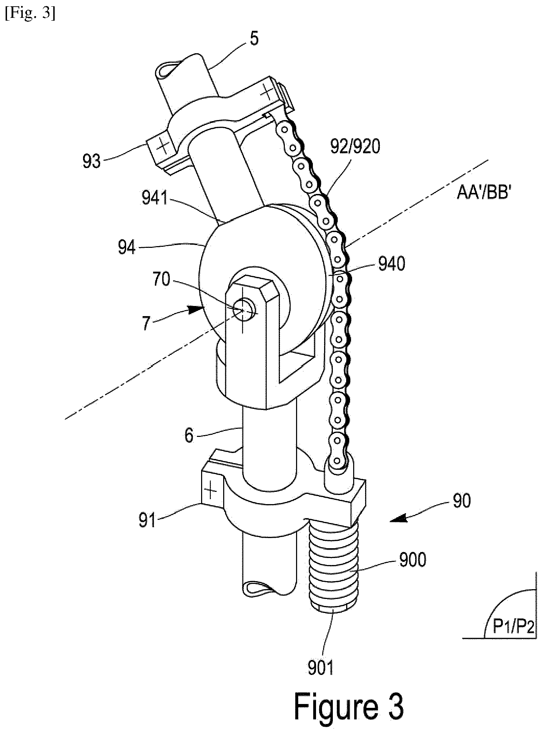

Selon une caractéristique de l'invention, le dispositif 1 comporte des moyens de réglage de la position des moyens d'assistance musculaire 9, et plus précisément des moyens de fixation et des moyens de fixation complémentaires sur la barre inférieure 6 et supérieure 5, c'est-à-dire ici les brides de compression 91 et les brides de tension 93. Ces brides 91, 93 peuvent être formées par deux demi-cercles taraudés à leurs extrémités et assemblés l'un à l'autre par des tiges filetées traversant lesdits extrémités taraudées, et montées solidaires des barres respectives par vissage des tiges filetées de manière à serrer les brides sur les barres, comme illustré sur les figures 1 et 3.

Ainsi, en dévissant les filetages, un utilisateur peut déplacer et régler la position des brides 91, 93 sur la barre respective pour assurer un calibrage de la chaine à rouleaux 920 à une tension minimale, proche de zéro Newton, lorsque le dispositif est en position de repos.

Selon une caractéristique de l'invention, la barre inférieure 6 et/ou supérieure 5 de chaque ensemble 3, 4 comportent des moyens d'ajustement de leurs longueurs respectives, sous la forme par exemple d'une barre en deux parties télescopiques l'une dans l'autre, présentant des moyens de réglage de la longueur par des trous coopérant avec un ergot monté sur ressort, comme illustré sur la [Fig.2].

Selon une caractéristique de l'invention, et comme illustré sur la [Fig.1], le dispositif 1 peut comporter des boucliers venant protéger les organes de rappel élastiques 90 de chaque ensemble 3, 4.

Selon une caractéristique de l'invention, comme illustré sur la [Fig.2], le dispositif 1 peut comporter des moyens de débrayage et d'embrayage des moyens d'assistance musculaire 9. En actionnant un levier pivotant autour d'un axe déporté, un utilisateur peut ainsi mettre dans une première configuration en tension minimale le lien 92 en position de repos, ou rendre dans une seconde configuration détendu le lien 92 en position de repos, ce qui facilite les déplacements d'un utilisateur équipé dudit dispositif 1.

## Revendications

1. Dispositif (1) mécanique d'assistance musculaire propre à assister musculairement un utilisateur équipé dudit dispositif (1), ledit dispositif (1) comportant deux ensembles (3, 4) de part et d'autre des membres inférieurs de l'utilisateur, reliés chacun à une assise (2) du dispositif (1) par une articulation de hanche (20), chaque ensemble (3, 4) comportant une barre supérieure (5) du dispositif (1) reliée à l'assise (2) d'une part et d'autre part à une barre inférieure (6) par une articulation de genou (7) libre en rotation au moins partiellement, la barre supérieure (5) pivotant par rapport à la barre inférieure (6) autour de l'articulation de genou (7) entre une position de pliage minimale dite de repos et une position de pliage maximale, chaque ensemble (3, 4) comportant également des moyens de fixation (8) propres à le solidariser à une jambe correspondante d'un utilisateur équipé dudit dispositif (1), **caractérisé par le fait que** chaque ensemble (3, 4) du dispositif (1) comporte en outre des moyens d'assistance musculaire (9) exerçant, lorsque l'ensemble (3, 4) est dans une position intermédiaire comprise entre la position de repos et la position de pliage maximale, un effet de rappel élastique de la position intermédiaire vers la position de repos, cet effet de rappel élastique étant propre à exercer, au niveau de l'assise (2), une force verticale dirigée du bas du dispositif (1) vers le haut du dispositif (1), dite force de rappel, ladite force de rappel présentant une valeur définie, à un intervalle de tolérance près, quelle que soit ladite position intermédiaire.

2. Dispositif (1) selon la revendication 1, **caractérisé par le fait que**, lorsqu'un ensemble (3, 4) est dans une position de repos, l'angle (a) entre la barre supérieure (5) et la barre inférieure (6) est de 180 degrés, et/ou lorsqu'un ensemble (3, 4) est dans une position de pliage maximale, l'angle (a) entre la barre supérieure (5) et la barre inférieure (6) est de 60 degrés.

3. Dispositif (1) selon l'une des revendications 1 ou 2, **caractérisé par le fait que** les moyens d'assistance musculaire (9) de chaque ensemble (3, 4) comportent un organe de rappel élastique (90) rattaché par une extrémité solidairement à des moyens de fixation de l'organe de rappel élastique (90) à l'un de la barre supérieure (5) ou de la barre inférieure (6), ledit organe de rappel élastique (90) s'étendant sous la forme d'un lien (92) à des moyens de fixation complémentaires de l'autre barre inférieure (6) ou supérieure (5), ledit lien (92) collaborant avec un organe de renvoi (94) au niveau de l'articulation de genou (7).

4. Dispositif (1) selon la revendication 3, **caractérisé par le fait que** l'organe de rappel élastique (90) comporte un élément à effet ressort de raideur constante et **par le fait que** l'organe de renvoi (94) comporte une gorge (940) dans laquelle coopère le lien (92), l'organe de renvoi (94) présentant en outre un profil courbe vu latéralement, ledit profil courbe suivant une courbe formée de portions successives tangentes à des arcs de cercle de rayons différents, propres à modifier la valeur de l'effet de rappel élastique et la force de rappel verticale exercée vers le haut par le dispositif (1) au niveau de l'assise (2).

5. Dispositif (1) selon la revendication 4, **caractérisé par le fait que** le profil courbe de l'organe de renvoi (94) suit une courbe passant par au moins 50% des points aux coordonnées exprimées en millimètres du tableau suivant, avec une tolérance de plus ou moins 0,1 millimètres :

| Angle $\alpha$ en degrés entre la barre supérieure 5 et la barre inférieure 6 | Référence du point correspondant sur la figure 4 | Dist Di : Distance entre le point Di et l'axe de rotation de l'articulation de genou en millimètres |
|---|---|---|
| 180 (angle $\alpha$ de position de repos définie) | D0 | 34,000 |
| 170 | D1 | 34,000 |
| 160 | D2 | 34,000 |
| 150 | D3 | 34,000 |
| 140 | D4 | 34,000 |
| 130 | D5 | 34,000 |
| 120 | D6 | 33,500 |
| 110 | D7 | 33,000 |
| 100 | D8 | 32,500 |
| 90 | D9 | 31,643 |
| 80 | D10 | 30,500 |
| 70 | D11 | 29,105 |
| 60 angle $\alpha$ de | D12 | 28,000 |
| position de pliage maximale définie | | |
| 50 | D13 | 27,000 |
| 40 | D14 | 26,000 |
| 30 | D15 | 25,000 |
| 20 | D16 | 24,000 |
| 10 | D17 | |

6. Dispositif (1) selon la revendication 4, **caractérisé par le fait que** le profil courbe de l'organe de renvoi (94) suit une courbe passant par au moins 100% des points aux coordonnées exprimées en millimètres du tableau suivant, avec une tolérance de plus ou moins 0,1 millimètres :

| Angle $\alpha$ en degrés entre la barre supérieure 5 et la barre inférieure 6 | Référence du point correspondant sur la figure 4 | Dist Di : Distance entre le point Di et l'axe de rotation de l'articulation de genou en millimètres |
|---|---|---|
| 180 (angle $\alpha$ de position de repos définie) | D0 | 34,000 |
| 170 | D1 | 34,000 |

(suite)

| Angle $\alpha$ en degrés entre la barre supérieure 5 et la barre inférieure 6 | Référence du point correspondant sur la figure 4 | Dist Di : Distance entre le point Di et l'axe de rotation de l'articulation de genou en millimètres |
|---|---|---|
| 160 | D2 | 34,000 |
| 150 | D3 | 34,000 |
| 140 | D4 | 34,000 |
| 130 | D5 | 34,000 |
| 120 | D6 | 33,500 |
| 110 | D7 | 33,000 |
| 100 | D8 | 32,500 |
| 90 | D9 | 31,643 |
| 80 | D10 | 30,500 |
| 70 | D11 | 29,105 |
| 60 angle $\alpha$ de position de pliage maximale définie | D12 | 28,000 |
| 50 | D13 | 27,000 |
| 40 | D14 | 26,000 |
| 30 | D15 | 25,000 |
| 20 | D16 | 24,000 |
| 10 | D17 | |

**7.** Dispositif (1) selon l'une des revendications 4 à 6, **caractérisé par le fait qu'**il comporte des moyens de réglage de la position des moyens d'assistance musculaire (9), et plus précisément des moyens de fixation et des moyens de fixation complémentaires sur la barre inférieure (6) et supérieure (5).

**8.** Dispositif (1) selon l'une des revendications 4 à 7, **caractérisé par le fait que** la barre inférieure (6) et/ou supérieure (5) des ensembles (3, 4) comportent des moyens d'ajustement de leurs longueurs respectives.

**9.** Dispositif (1) selon l'une des revendications 4 à 7, **caractérisé par le fait qu'**il comporte des moyens de débrayage et d'embrayage des moyens d'assistance musculaire (9).

[Fig. 1]

Figure 1

[Fig. 2]

Figure 2

[Fig. 3]

Figure 3

[Fig. 4]

Figure 4

[Fig. 5]

Figure 5

[Fig. 6]

FIG 6

Europäisches
Patentamt

European
Patent Office

Office européen
des brevets

# RAPPORT DE RECHERCHE EUROPEENNE

**Numéro de la demande**

**EP 22 18 9264**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | WO 2020/079910 A1 (HONDA MOTOR CO LTD [JP]) 23 avril 2020 (2020-04-23) | 1,2 | INV. B25J9/00 A61H1/02 |
| Y | * le document en entier * ----- | 3-9 | |
| Y | US 10 835 445 B2 (HONDA MOTOR CO LTD [JP]) 17 novembre 2020 (2020-11-17) * le document en entier * ----- | 3,9 | |
| Y | US 2018/280178 A1 (SHIMADA KEI [JP] ET AL) 4 octobre 2018 (2018-10-04) * le document en entier * ----- | 4-6 | |
| Y | CN 106 514 625 A (UNIV SOUTHEAST) 22 mars 2017 (2017-03-22) * le document en entier * ----- | 7 | |
| Y | US 4 138 156 A (BONNER DARCY R) 6 février 1979 (1979-02-06) * le document en entier * ----- | 8 | |
| Y | CN 106 109 181 A (YUAN BO) 16 novembre 2016 (2016-11-16) * le document en entier * ----- | 9 | DOMAINES TECHNIQUES RECHERCHES (IPC) B25J A61H |
| A | US 2011/251534 A1 (MATSUOKA YOSHIHISA [JP]) 13 octobre 2011 (2011-10-13) * le document en entier * ----- | 1-9 | |

Le présent rapport a été établi pour toutes les revendications

| Lieu de la recherche | Date d'achèvement de la recherche | Examinateur |
|---|---|---|
| Munich | 13 janvier 2023 | Vázquez Cabello, R |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
...........................................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 22 18 9264

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

13-01-2023

| Document brevet cité au rapport de recherche | | Date de publication | Membre(s) de la famille de brevet(s) | | | Date de publication |
|---|---|---|---|---|---|---|
| WO 2020079910 | A1 | 23-04-2020 | CN | 112839779 | A | 25-05-2021 |
| | | | JP | 6937442 | B2 | 22-09-2021 |
| | | | JP | WO2020079910 | A1 | 02-09-2021 |
| | | | US | 2021330541 | A1 | 28-10-2021 |
| | | | WO | 2020079910 | A1 | 23-04-2020 |
| US 10835445 | B2 | 17-11-2020 | CN | 108247607 | A | 06-07-2018 |
| | | | DE | 102017223442 | A1 | 28-06-2018 |
| | | | DE | 102017223815 | A1 | 28-06-2018 |
| | | | JP | 6584384 | B2 | 02-10-2019 |
| | | | JP | 2018102755 | A | 05-07-2018 |
| | | | US | 2018177672 | A1 | 28-06-2018 |
| US 2018280178 | A1 | 04-10-2018 | CN | 108743246 | A | 06-11-2018 |
| | | | DE | 102018204783 | A1 | 04-10-2018 |
| | | | JP | 6781091 | B2 | 04-11-2020 |
| | | | JP | 2018164694 | A | 25-10-2018 |
| | | | US | 2018280178 | A1 | 04-10-2018 |
| CN 106514625 | A | 22-03-2017 | AUCUN | | | |
| US 4138156 | A | 06-02-1979 | AUCUN | | | |
| CN 106109181 | A | 16-11-2016 | AUCUN | | | |
| US 2011251534 | A1 | 13-10-2011 | JP | 5213682 | B2 | 19-06-2013 |
| | | | JP | 2010142353 | A | 01-07-2010 |
| | | | US | 2011251534 | A1 | 13-10-2011 |
| | | | WO | 2010070807 | A1 | 24-06-2010 |

EPO FORM P0460

Pour tout renseignement concernant cette annexe : voir Journal Officiel de l'Office européen des brevets, No.12/82

**RÉFÉRENCES CITÉES DANS LA DESCRIPTION**

**Documents brevets cités dans la description**

- US 4138156 A